(19) Europäisches Patentamt
European Patent Office
Office européen des brevets

(11) **EP 3 547 211 B1**

(12) **EUROPEAN PATENT SPECIFICATION**

(45) Date of publication and mention
of the grant of the patent:
**17.11.2021 Bulletin 2021/46**

(51) Int Cl.:
**G06K 9/00** *(2006.01)*

(21) Application number: **18305367.7**

(22) Date of filing: **30.03.2018**

(54) **METHODS FOR TRAINING A CNN AND CLASSIFYING AN ACTION PERFORMED BY A SUBJECT IN AN INPUTTED VIDEO USING SAID CNN**

VERFAHREN ZUM TRAINIEREN EINES CNN UND KLASSIFIZIERUNG EINER AKTION, DIE VON EINER PERSON IN EINEM EINGEGEBENEN VIDEO AUSGEFÜHRT WIRD, MITHILFE DES BESAGTEN CNN

PROCÉDÉS PERMETTANT D'ENTRAÎNER UN CNN ET DE CLASSIFIER UNE ACTION EFFECTUÉE PAR UN SUJET DANS UNE VIDÉO ENTRÉE AU MOYEN DUDIT CNN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2019 Bulletin 2019/40**

(73) Proprietor: **Naver Corporation
Seongnam-si, Gyeonggi-do 13561 (KR)**

(72) Inventors:
• **CHOUTAS, Vasileios**
**41221 Larissa (GR)**
• **WEINZAEPFEL, Philippe**
**38330 Montbonnot-Saint-Martin (FR)**
• **REVAUD, Jérôme**
**38240 Meylan (FR)**
• **SCHMID, Cordelia**
**38330 Saint Ismier (FR)**

(74) Representative: **Regimbeau
87, rue de Sèze
69451 Lyon Cedex 06 (FR)**

(56) References cited:
**CN-A- 107 273 800    US-A1- 2017 255 832**

• **HAKAN BILEN ET AL: "Dynamic Image Networks for Action Recognition", 2016 IEEE CONFERENCE ON COMPUTER VISION AND PATTERN RECOGNITION (CVPR), 1 June 2016 (2016-06-01), pages 3034-3042, XP055507232, DOI: 10.1109/CVPR.2016.331 ISBN: 978-1-4673-8851-1**
• **ALI DIBA ET AL: "Deep Temporal Linear Encoding Networks", ARXIV.ORG, CORNELL UNIVERSITY LIBRARY, 201 OLIN LIBRARY CORNELL UNIVERSITY ITHACA, NY 14853, 21 November 2016 (2016-11-21), XP080732811, DOI: 10.1109/CVPR.2017.168**

**Description**

FIELD OF THE INVENTION

The field of this invention is that of machine learning.

More particularly, the invention relates to methods for training a convolutional neural network for classification of actions, in particular human actions, and for using such convolution neural network.

BACKGROUND OF THE INVENTION

Computer vision is a recent field of endeavor which aims at providing computers with high-level understanding from digital videos. It seeks to automate tasks that the human visual system can do.

One of the most challenging tasks is the human action recognition, i.e. the ability to visually identify an action performed by a human, in particular among a list of possibilities (classification).

For example, it could be useful for automatically detecting threats in public space (for example a fight, the draw of a weapon, etc.), a need for assistance (for example a fall in stairs, a sudden stroke, a panic, etc.), or simply for improving improved interaction with robots. For an autonomous vehicle, dangerous behaviors of humans could be detected and the vehicle could adapt its speed consequently.

In the context of indexing a huge amount of videos or proposing ads, it could allow to base the relevance not only on the metadata, that might be biased, but also on the actual content of the videos.

The difficulty of human action recognition is due to the huge number and the variability in possible actions, and to the importance of multiple cues (appearance, motion, pose, objects, etc.) for different actions.

In addition, actions can span various temporal extents and can be performed at different speeds.

It has been proposed to use Convolutional Neural Networks (CNNs) to this end. They are a type of Neural Networks wherein the connection pattern between the neurons is inspired by the visual cortex of animals. They are thus especially suitable for video processing, they indeed allow efficiently the recognition of objects or people in images.

Thus, after a supervised learning stage wherein a CNN is trained by feeding it a training set of videos already classified, i.e. provided with the labels of the actions that occurs in the videos, the CNN becomes able to classify on its own some inputted videos (which are not labelled, in particular "fresh" videos from live CCTV).

The recent I3D method (see J. Carreira and A. Zisserman. Quo vadis, action recognition? A new model and the Kinetics dataset In CVPR, 2017.) proposes for human action recognition a "two streams" approach wherein two classification streams are trained independently and combined at test time. The first one operates on the appearance of the video by taking RGB data as input. The second one is based on the motion, taking as input the optical flow that is computed with off-the-shelf methods, converted into images and stacked over several frames.

This approach appears to be perfectible as some actions stay difficult to recognize. Moreover, it requires several days of training and a careful initialization.

There is a consequently need for an improvement in human action recognition using CNNs which could outperform known techniques while being faster to train.

SUMMARY OF THE INVENTION

For these purposes, the present invention provides according to a first aspect a method for training a convolution neural network, CNN, for classification of an action performed by a subject in a video; the method being characterized in that it comprises the implementation, by a data processor of a first server of steps of:

    (a) For each video of a base of training videos depicting said subject performing already classified actions,

        (a0) for each frame of said video, for each of at least one keypoint of the subject, generating a heatmap of the keypoint representing a position estimation of the keypoint within said frame;
        (a1) colorizing each heatmap as a function of the relative time of the corresponding frame in the video;
        (a2) for each keypoint, aggregating all the colorized heatmaps of the keypoint into at least one image representing the evolution of the position estimation of the keypoint during the video;

    (b) Training the CNN using as input the sets associated to each training video of images representing the evolution of the position estimation of each keypoint during the video.

As it will be explained, this representation of the evolution of the position estimation of a keypoint during the video is a compact representation of both the appearance and the motion, which provides the best results in action recognition.

Preferred but non limiting features of the present invention are as follow:

- step (a2) comprises applying to each heatmap a C-dimensional colorization function only depending on the relative time of the corresponding frame in the video;
- the *T* frames are split into *C* — 1 intervals, the C-dimensional colorization function being defined so that in each k-th interval, $k \in [\![1; C-1]\!]$, the k-th component of said C-dimensional colorization function decreases from 1 to 0, the k+1-th component of said C-dimensional colorization function increases from 0 to 1, and any other component of said C-dimensional colorization function stays equal to 0;
- the components $o_c(t)$, c $\in$ [1; *C*] of the C-dimensional colorization function $o(t)$ satisfy the following properties:

  - $\forall t_1, t_2 \in [\![1; T]\!]^2, \sum_{c=1}^{C} o_c(t_1) = \sum_{c=1}^{C} o_c(t)$ ;
  - $\forall c \in [\![1; C]\!]$ , $o_c(t)$ is a continuous piecewise linear function.

- either C = 2 and one of $o_1(t)$ and $o_2(t)$ is $\frac{t-1}{T}$ and the other is $1 - \frac{t-1}{T}$ ; or C = 3 and one of $o_1(t)$, $o_2(t)$ and $o_3(t)$ is

$$\begin{cases} 2(1 - \frac{t-1}{T}) \ if \ t \le \frac{T}{2} + 1 \\ 0 \ if \ t \ge \frac{T}{2} + 1 \end{cases}$$ , another is $$\begin{cases} 0 \ if \ t \le \frac{T}{2} + 1 \\ 2\frac{t-1}{T} \ if \ t \ge \frac{T}{2} + 1 \end{cases}$$ , and the last one is $$\begin{cases} 2\frac{t-1}{T} \ if \ t \le \frac{T}{2} + 1 \\ 2(1 - \frac{t-1}{T}) \ if \ t \ge \frac{T}{2} + 1 \end{cases}$$ ;

- the colorized heatmap value $C_j^t$ of a keypoint j at frame *t* for a pixel (*x;y*) and a channel $c \in [\![1; C]\!]$ is given from the heatmap value $\mathcal{H}_j^t$ by the formula $C_j^t[x; y; c] = o_c(t) \cdot \mathcal{H}_j^t[x; y]$ , with $o_c(t)$ the c-th component of said C-dimensional colorization function $o(t)$;
- step (a2) comprises, for each keypoint, determining a raw image by summing colorized heatmaps of the keypoint over the frames;
- step (a2) comprises, for each raw image, the normalization of the raw image into a first normalized image;
- the first normalized image $U_j$ value of a keypoint j for a pixel *(x; y)* and a channel c is given from the corresponding raw image $S_j$ value by the formula $U_j^t[x; y; c] = \frac{S_j^t[x; y; c]}{max_{x', y'} S_j^t[x'; y'; c]}$ ;
- step (a2) comprises, for each first normalized image, the aggregation of the C channels of first normalized image into a 1-channel intensity image;
- each intensity image is determined by summing over the channels the corresponding first normalized image;
- step (a2) comprises, for each first normalized image, the further normalization of the first normalized image into second normalized image, as a function of the corresponding intensity image;
- the second normalized image $N_j$ value of a keypoint j for a pixel (*x;y*) and a channel *c* is given from the corresponding first normalized image $U_j$ value and the intensity image $I_j$ value by the formula $N_j[x; y; c] = \frac{U_j[x; y; c]}{\varepsilon + I_j[x; y]}$ ;
- at least two images representing the evolution of the position estimation of the keypoint during the video are obtained at step (a2), said images being stacked;
- step (b) comprises, for each training video, stacking the set of images associated to said training video, into a global image representing the evolution of the position estimation of all keypoints during the video, for use as input of the CNN.

The invention provides a method for classification of an action performed by a subject in an inputted Z video, the classification being performed by the CNN trained by the data processor of the first server in accordance with the learning method of the first aspect, characterized in that it comprises the implementation of steps of:

(b) For said inputted video,

(b0) for each frame of the video, for each of at least one keypoint of the subject, generating a heatmap of the keypoint representing a position estimation of the keypoint within said frame;
(b1) colorizing each heatmap as a function of the relative time of the corresponding frame in the video;
(b2) for each keypoint, aggregating all the colorized heatmaps of the keypoint into at least one image representing

EP 3 547 211 B1

the evolution of the position estimation of the keypoint during the video;

(c) Classifying the inputted video, by the data processing means of the second server, with the CNN trained in accordance with the learning method of the first aspect using as input a set of images representing the evolution of the position estimation of each keypoint during the video.

According to a Z second and a third aspects, the invention provides a computer program product, comprising code instructions for training a convolution neural network CNN, or for classification of an action performed by a subject in an inputted video; and a computer-readable medium, on which is stored a computer program product comprising code instructions for executing a method according to the first aspect for training a convolution neural network CNN, or for classification of an action performed by a subject in an inputted video.

BRIEF DESCRIPTION OF THE DRAWINGS

The above and other objects, features and advantages of this invention will be apparent in the following detailed description of an illustrative embodiment thereof, which is to be read in connection with the accompanying drawings wherein:

- figure 1 illustrates an example of architecture in which the method according to the invention is performed;
- figure 2a represents an embodiment of the step of processing a video performed by the methods according to the invention;
- figures 3a and 3b represents two examples of colorizing functions;
- figures 4a represent an example motion of a keypoint, and figures 4b-4d respectively represents the corresponding first normalized image, intensity image and second normalized images;

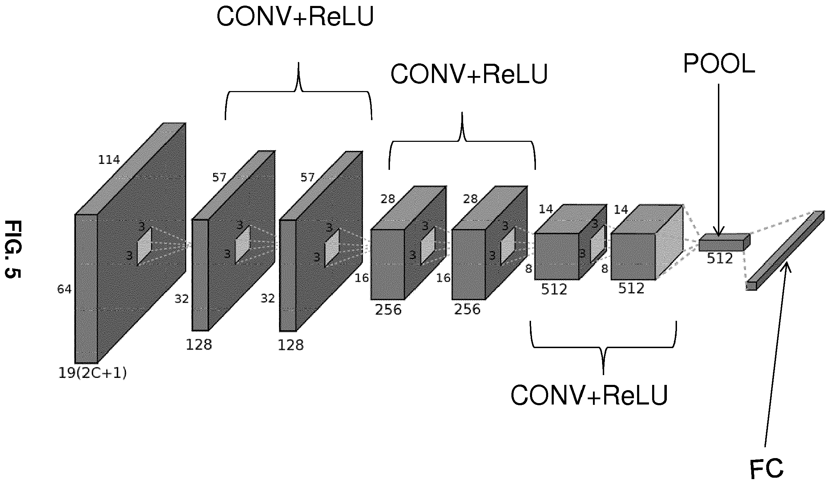

- figure 5 represents an example of CNN architecture for use in the methods according to the invention;
- figure 6 illustrates the efficiency of the present methods with respect to the prior art.

DETAILED DESCRIPTION OF A PREFERRED EMBODIMENT

*Architecture*

According to two complementary aspects of the present invention are proposed:

- a method for training a Convolutional Neural Network (CNN) for action classification of videos;
- a method for action classification of an inputted video using a CNN, advantageously trained according to the first method.

By action classification of videos, it is meant classification of actions performed by subjects in videos, i.e. the identification of at least one (possibly several) action occurring in the video, among a predetermined list of actions (which will be called "reference actions"). It is to be understood that there might be in some cases no action to be identified within the video.

Advantageously, videos (already classified or to be classified) are "trimmed", meaning that they are cut so as to last only a short amount of time (a few seconds) around a particular action. In such a case, each video contains one, and only one, action. The classification aims at identifying this one action.

The approach can be also extended to the case of untrimmed videos and related task such as action detection in time, by using a sliding window approach with multiple scales, in order to handle various time intervals than an action can span.

Any video (trimmed or not) is a sequence of $T$ frames (according to its length), numbered from 1 to T. In other words, a generic frame of a video will be referred to as frame $t$, with $t \in [\![1;T]\!]$. Each frame is an image, i.e. a matrix of pixels of a given size, for instance 368 x 368 pixels.

The actions in videos are actions performed by a determined "subject". By subject it is to be understand any kind of target detectable in a video, which can perform actions, and which presents recognizable "keypoints". In a preferred embodiment, said action is a living being action (i.e. the subject is a living being), and more particularly a human action (i.e. the subject is a human). In the example of human action classification, as it will be explained the keypoints are advantageously distinctive human anatomical features, in particular joints (such as knee, elbow, shoulder, etc.), extremities (such as hands, feet, head, etc.), or visible organs (such as eyes, ears, nose, etc.).

It is to be understand that the keypoints are points of the subjects which are easily trackable and allow distin-

4

guishing actions. For instance, in the case of human joints the wrist is easily extracted and allows distinguishing a wide range of arm poses. A predetermined list of $n$ keypoints may be provided, a generic keypoint of the list will be referred to as keypoint $j$, with $j \in [\![1; n]\!]$. For instance, $n$ = 18 human joints (in particular two ankles, two knees, two hips, two shoulders, two elbows, two wrists, two ears, two eyes, nose and body center) may be considered as keypoints.

The preferred example of a human action classification using joints as keypoints will be described in the present specification, but a skilled person would know how to adapt the present invention to other cases, for instance the classification of animal actions (the keypoints could still be distinctive anatomical features such as joints) or vehicle actions (the keypoints could be mechanical parts such as a wheel, a wing tip, a headlamp, a jet engine, etc.).

In the instant example of human action classification, at least part of the following list of reference actions could be used: ride bike, chew, wave, talk, swing baseball, drink, pullup, throw, clap, turn, smoke, handstand, ride horse, flic flac, golf, push, dribble, shoot bow, somersault, jump, situp, dive, climb stairs, eat, run, laugh, shoot gun, punch, pushup, shoot ball, sit, kiss, catch, climb, shake hands, brush hair, kick ball, hit, walk, fall floor, smile, hug, cartwheel, stand, pour, kick, sword exercise, pick, fencing, draw sword.

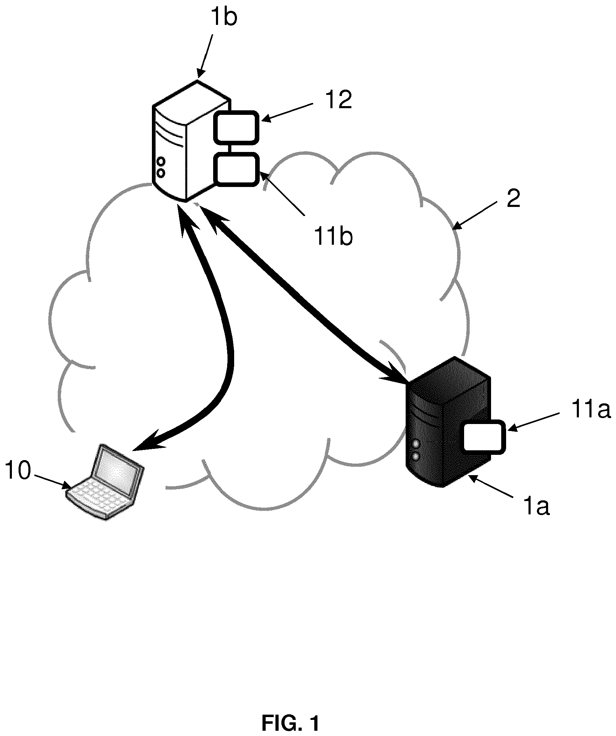

The above mentioned two types of methods are implemented within an architecture such as illustrated in **Figure 1,** by means of a first and/or second server 1a, 1b. The first server 1a is the learning server (implementing the first method) and the second server 1b is a classification server (implementing the second method). It is fully possible that these two servers may be merged.

Each of these servers 1a, 1b is typically remote computer equipment connected to an extended network 2 such as the Internet for data exchange. Each one comprises data processing means 11a, 11b of processor type (in particular the data processing means 11a of the first server have strong computing power, since learning is long and complex compared with ordinary use of the trained CNN), and optionally storage means 12 such as a computer memory e.g. a hard disk.

The memory 12 of the first server 1a stores a training database i.e. a set of already classified data (as opposed to so-called inputted data that precisely is sought to be classify). As explained, the data is here constituted of videos (in particular trimmed), the training examples being videos with labels of actions occurring within. In other words, the training video depicting said subject (in particular the human) performing already classified actions.

The architecture advantageously comprises one or more items of client equipment 10, which may be any work station (also connected to network 2), preferably separate from the servers 1a, 1b but possibly being merged with one and/or the other thereof. The client equipment 10 has one or more data items to be classified. The operators of the equipment are typically "clients" in the commercial meaning of the term, of the service provider operating the first and/or second servers 1a, 1b.

*Training method*

In a first aspect, there is proposed a training method, implemented by the data processing means 11a of the first server 1a. Said method trains a convolution neural network, CNN, for classification of actions performed by subjects in videos.

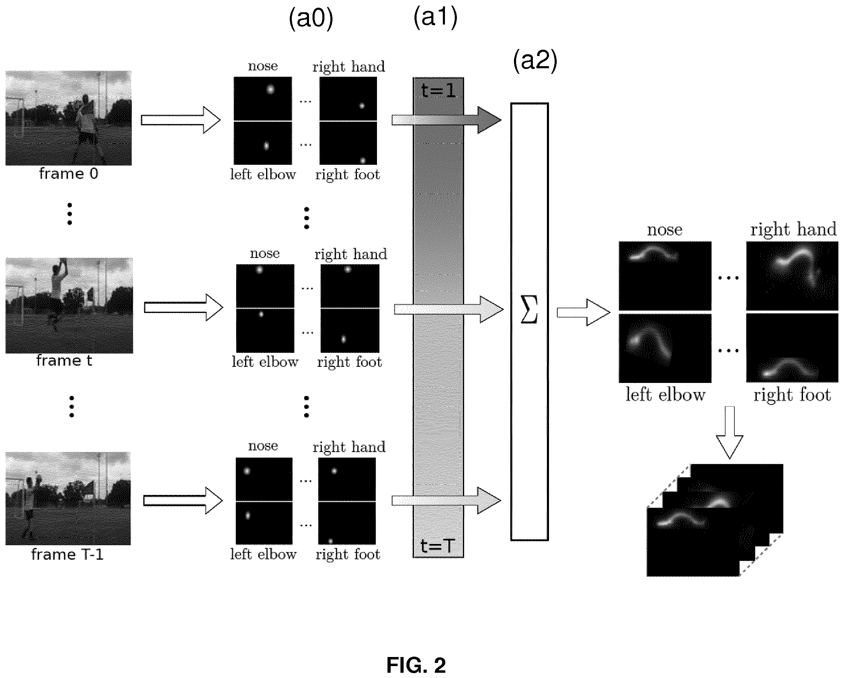

In a first step (a), illustrated by **figure 2**, the training video are preprocessed so as to obtain for each of them a "compact" representation of the entire video, which jointly considers appearance and motion. In other words, instead of training independently two classification streams respectively for appearance and motion, the present invention deals with them simultaneously. Said compact representation is nicknamed "PoTion" meaning that it encodes both "Pose and moTion". Considering them jointly indeed offers rich information for action recognition.

To this end, the idea is to focus on the movement of a few relevant keypoints over an entire video. Modeling the motion of a few keypoints stands in contrast to the usual processing of the optical flow in which all pixels are given the same importance independently of their semantics.

Using a video-level representation allows to capture long-term dependencies, in contrast to most approaches that are limited to frames or snippets. Moreover, as it will be explained the proposed PoTion representation is fixed-size, i.e., it does not depend on the duration of the video clip. It can thus be passed to a conventional CNN for classification without having to resort to recurrent networks or more sophisticated schemes.

It is to be understood that either the CNN is not involved in step (a), or the CNN is trained end-to-end from heatmap extraction to PoTion classification, as building the PoTion representation is fully differentiable.

Step (a) comprises the iterative processing of each video of the training set. In reference to figure 2, each video is processed frame by frame, and for each frame keypoint by keypoint. In the example of figure 2, four keypoints are considered: nose, left elbow, right hand and right foot.

In a first sub-step (a0), for each frame $t \in [\![1; T]\!]$ of said video, for each keypoint $j \in [\![1; n]\!]$ of said list of keypoints, the processing means 11a generates a heatmap $\mathcal{H}_j^t$ of the keypoint representing a position estimation of the keypoint within said frame.

The heatmap $\mathcal{H}_j^t$ is associated with the pair (frame $t$, keypoint $j$), in other words a collection $\{\mathcal{H}_j^t\}_{t\in[\![1;T]\!],j\in[\![1;n]\!]}$ of $T \cdot n$ heatmaps $\mathcal{H}_j^t$ are generated. It is to be noted that for each frame $t$ a further heatmap $\mathcal{H}_0^t$ could be generated for the background.

The sub-step (a0) could be seen as a keypoint localization task. By "heatmap", it is meant a probabilistic map indicating the estimated probability at each pixel for the presence of each joint. i.e., $\mathcal{H}_j^t[x;y]$ is the likelihood of pixel $(x; y)$ containing keypoint $j$ at frame $t$.

2D pose estimation methods outputting keypoints heatmaps are well known to the skilled person, see for instance Z. Cao, T. Simon, S.-E. Wei, and Y. Sheikh. Realtime multi-person 2D pose estimation using part affinity fields. In CVPR, 2017, for human joints heatmaps. This solution can handle the presence of multiple people and is robust to occlusion and truncation. It extracts joint heatmaps as well as fields that represent the affinities between pairs of joints corresponding to bones, in order to associate the different joint candidates into instances of human poses.

The spatial resolution of an heatmap could be lower than the input frame, due to the stride of the network. For instance, the architecture from the above-mentioned solution has a stride of 8, which leads to 46 x 46 heatmaps for an input frame of size 368 x 368. In practice, all heatmaps $\mathcal{H}_j^t$ could be rescaled such that they have the same size by setting the smallest dimension to a threshold, for instance 64 pixels. In the following, we denote the heatmap width and height after rescaling by $W$ and $H$ respectively, i.e., $\min(W; H)$ = 64. The heatmaps values $\mathcal{H}_j^t[x;y]$ could also be clamped to the range [0; 1], as output values can be slightly below 0 or above 1 despite being trained to regress probabilities.

The proposed representation can be extended to any kind of heatmap, such as the feature maps computed by CNNs for image recognition, object detection or place recognition.

In a second sub-step (a1), each heatmap $\mathcal{H}_j^t$ is colorized as a function of the relative time $t$ of the corresponding frame in the video. In other words, for each heatmap $\mathcal{H}_j^t$ of dimension $W$ x $H$ is generated a corresponding colorized heatmap $C_j^t$ of dimension W x $H$ x C, i.e. with the same spatial resolution but $C > 1$ channels. The $C$ channels can be interpreted as color channels, for instance a colorized heatmap $C_j^t$ with $C$ = 2 channels can be visualized as an image with red and green channels, and a colorized heatmap $C_j^t$ with $C$ = 3 channels can be visualized as an image with red, green and blue channels. By contrast, the initial heatmap $\mathcal{H}_j^t$ is a one channel image, i.e. a "greyscale". The method appears to be practical with C = 2 or 3 because it allows a visualization by mapping each channel to RGB, but values of $C$ exceeding 3 (advantageously $C$ = 4) bring efficient results.

A color can be defined as a C-dimensional tuple $o \in [0; 1]^C$, i.e. a pondered combination of the different channels. Sub-step (a2) preferably comprises applying to each heatmap $\mathcal{H}_j^t$ a C-dimensional colorization function $o(t) = (o_1(t),...,o_C(t))$ only depending on the relative time of the corresponding frame $t$ in the video.

In other words, the same color $o(t)$ is applied to colorize the heatmaps $\mathcal{H}_j^t$ for all keypoints $j$ at a given frame $t$.

And advantageously, the colorized heatmap value $C_j^t$ of a keypoint $j$ at frame $t$ for a pixel $(x; y)$ and a channel $c \in [\![1;C]\!]$ is thus given from the (initial, one-channel) heatmap value $\mathcal{H}_j^t$ by the formula $C_j^t[x;y;c] = o_c(t) \cdot \mathcal{H}_j^t[x;y]$, with $o_c(t)$ the c-th component of said C-dimensional colorization function $o(t)$.

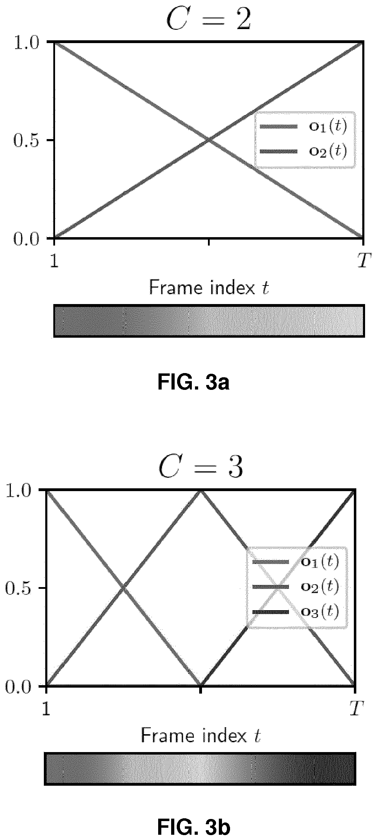

Different colorization schemes (i.e., definitions of o(t)) are possible, in particular corresponding to various numbers of output channels C, examples illustrated by **figures 3a-3b** will be given below. Top part of figures 3a and 3b illustrates the components $o_1(t)$, ..., $o_c(t)$, and bottom part displays the resulting color $o(t)$.

Preferably, the function o(t) satisfies the following properties:

- $\forall t_1, t_2 \in [\![1; T]\!]^2, \sum_{c=1}^{C} o_c(t_1) = \sum_{c=1}^{C} o_c(t)$ , i.e. the sum of *o(t)* components is constant, in particular equal to one, for just "colorizing" the heatmap, i.e. adding temporal information with the color and not altering the position estimation information when doing the above mentioned product;

- $\forall c \in [\![1; C]\!]$ , $o_c(t)$ is a continuous piecewise linear function of the relative time *t*, i.e. the color is linearly varying which allows representing realistically the passing time.

In figure 3a is proposed a colorization scheme for 2 channels wherein red and green colors for channel 1 and 2 are used for visualization. The main idea is to colorize the first frame (*t* = 1) in red, the last one (*t* = *T*) in green, and the middle one $(t = \frac{T}{2} + 1)$ with equal proportion (50%) of green and red. The exact proportion of red and green is a linear function of *t*, i.e. $\frac{t-1}{T}$ . In the example of figure 3a, $o_1(t) = 1 - \frac{t-1}{T}$ and $o_2(t) = \frac{t-1}{T}$ .

In figure 3b is proposed a colorization scheme for 3 channels wherein red, green and blue colors for channel 1, 2 and 3 are used for visualization. The main idea is to colorize the first frame (*t* = 1) in red, the last one (*t* = *T*) in blue, and the middle one $(t = \frac{T}{2} + 1)$ in green. The exact proportion of red and green is a linear function of *t*, i.e. $2\frac{t-1}{T}$ . In the example of figure 3b,

$$o_1(t) = \begin{cases} 2(1 - \frac{t-1}{T}) \ if \ t \leq \frac{T}{2} + 1 \\ 0 \ if \ t \geq \frac{T}{2} + 1 \end{cases} , \quad o_2(t) = \begin{cases} 2\frac{t-1}{T} \ if \ t \leq \frac{T}{2} + 1 \\ 2(1 - \frac{t-1}{T}) \ if \ t \geq \frac{T}{2} + 1 \end{cases} , \quad \text{and}$$

$$o_3(t) = \begin{cases} 0 \ if \ t \leq \frac{T}{2} + 1 \\ 2\frac{t-1}{T} \ if \ t \geq \frac{T}{2} + 1 \end{cases} .$$

In both examples, colors can be swapped indistinctly, i.e. components $o_1(t),..., o_c(t)$ permuted (if *C* = 2, one of $o_1(t)$ and $o_2(t)$ is $\frac{t-1}{T}$ and the other is $1 - \frac{t-1}{T}$ ; if *C* = 3 one of $o_1(t)$, $o_2(t)$ and $o_3(t)$ is $\begin{cases} 2(1 - \frac{t-1}{T}) \ if \ t \leq \frac{T}{2} + 1 \\ 0 \ if \ t \geq \frac{T}{2} + 1 \end{cases}$ ,

another is $\begin{cases} 0 \ if \ t \leq \frac{T}{2} + 1 \\ 2\frac{t-1}{T} \ if \ t \geq \frac{T}{2} + 1 \end{cases}$ , and the last one is $\begin{cases} 2\frac{t-1}{T} \ if \ t \leq \frac{T}{2} + 1 \\ 2(1 - \frac{t-1}{T}) \ if \ t \geq \frac{T}{2} + 1 \end{cases}$ ) .

This approach can be extended to any number of color channels C. The idea is to split the T frames into C — 1 regularly sampled intervals.

In each k-th interval, $k \in [\![1; C - 1]\!]$ , $o_k(t)$ decreases from 1 to 0, $o_{k+1}(t)$ increases from 0 to 1, and any other $o_c(t)$ stays equal to 0 (other maximal values than 1 could be used). As explained all variations are preferably linear.

The components could also be determined recursively: in the first *C* — 2 interval, can be applied the coloring scheme for *C* - 1 channels, and in the last channel $o_{c-1}(t)$ decrease from 1 to 0, $o_c(t)$ increase from 0 to 1, and any other $o_c(t)$ stays equal to 0.

In a following step (a2), the processing means 11a aggregates all the colorized heatmaps $C_j^t$ of a keypoint *j* (i.e. for the different frames *t*) into at least one image $S_j, U_j, I_j, N_j$ representing the evolution of the position estimation of the keypoint *j* during the video. This is performed for each keypoint $j \in [\![1; n]\!]$ . Said images $S_j, U_j, I_j, N_j$ are simultaneous representations of appearance and motion.

As it will be explained, different ways of aggregating the colorized heatmaps $C_j^t$ are possible, and in particular up to four types of said images can be processed:

- A raw image $S_j$,

- A first normalized image $U_j$,
- An intensity image $I_j$, and
- A second normalized image $N_j$.

All of them are representing the evolution of the position estimation of the keypoint $j$ during the video, and are excellent candidates for said "PoTion" representation.

It is to be understood that any number of these types of images can be generated in step (a2), either sequentially, or directly.

For instance, will be disclosed a preferred embodiment wherein the four types are generated as consecutives stages, each stage from the previous one, but it is to be understand that a skilled person may for example prefer to directly generate the second normalized image $N_j$ as PoTion representation by using the suitable formula.

The raw image $S_j$ is a C-channel image (of dimension W x $H$ x C) which can be easily obtained by summing colorized heatmaps $C_j^t$ over the frames $t$: $S_j = \sum_{t=1}^{T} C_j^t$ .

Note that the values of $S_j$ are increasing with the number of frames $T$ because of the sum: the longer the video is, the higher the average value of $S_j$ over the pixels will ultimately be.

To obtain an invariant representation, step (a2) advantageously comprises, for each raw image $S_j$, the normalization of the raw image $S_j$ into a (still $C$-channels) first normalized image $U_j$. For example, for each channel $c$ the summed heatmap value is independently normalized by dividing by the maximum value over all pixels, i.e.

$$U_j[x;y;c] = \frac{S_j[x;y;c]}{max_{x',y'} S_j[x';y';c]}$$ . Alternatively, the normalization may be performed by dividing by the sum of colorization components $o_c(t)$ over all frames, i.e. $U_j[x;y;c] = \frac{S_j[x;y;c]}{\sum_{t=1}^{T} o_c(t)}$ .

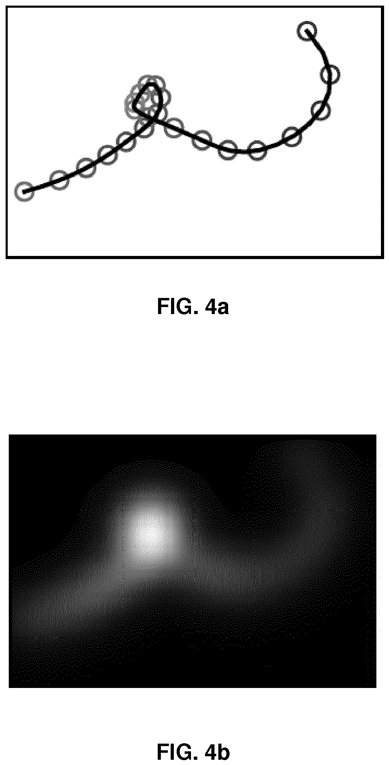

For an example motion of a keypoint as represented by **figure 4a, figure 4b** represents the corresponding 3-channels first normalized image $U_j$ obtained. It can be observed that the temporal evolution of the keypoint position is encoded by the color, and easily visible.

This first normalized image $U_j$ can be used efficiently as "PoTion" representation of the evolution of the position estimation of the keypoint $j$ during the video. However, it is to be noted that if a keypoint stays at a given position for some time, a stronger intensity will be obtained (middle of the trajectory in the example of figure 4b). This phenomenon could be detrimental so step (a2) then preferably comprises a second part, so as to further normalize the intensity.

In this second part, step (a2) advantageously comprises, for each first normalized image $U_j$, the aggregation of the C channels of first normalized image $U_j$ into a 1-channel intensity image $I_j$. This representation has no information about temporal ordering (it is again a "greyscale" image), but encodes how much time a pixel stays at each location.

Each intensity image $I_j$ can be determined by summing over the channels c the corresponding first normalized image $U_j$. In other words, the intensity image value $I_j$ of a keypoint $j$ for a pixel $(x;y)$ is given by the formula

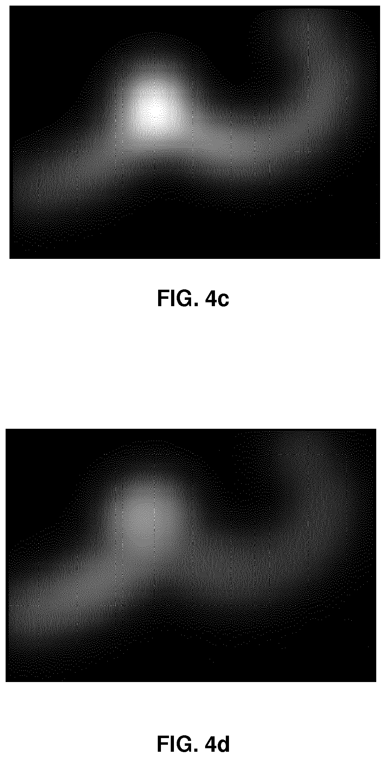

$$I_j[x;y] = \sum_{c=1}^{C} U_j[x;y;c]$$ . The corresponding example of intensity image $I_j$ is shown by **figure 4c.**

To obtain a fully normalized representation, step (a2) advantageously comprises, for each first normalized image $U_j$, the further normalization of the first normalized image $U_j$ into a (still $C$-channels) second normalized image $N_j$ (which can be considered as a "doubly" normalized image), as a function of the corresponding intensity image $I_j$.

For example, the first normalized image $U_j$ can be divided by the intensity image $I_j$, i.e. $N_j[x;y;c] = \frac{U_j[x;y;c]}{\varepsilon+I_j[x;y]}$ , with a parameter for avoiding instability in areas with low intensity (in particular $\varepsilon = 1$). In the second normalized image $N_j$, all locations of the motion trajectory are weighted equally, regardless of the amount of time spent at each location. Indeed, momentary stops in the trajectory are weighted more than other trajectory locations in $U_j$ and $I_j$. The division in the above formula cancels out this effect

The corresponding example of second normalized image $N_j$ is shown by **figure 4d.** It can be observed that the "loop" part is has no more an abnormal over-intensity.

This second normalized image $N_j$ can thus be used as a great "PoTion" representation of the evolution of the position estimation of a keypoint $j$ during the video.

In a preferred embodiment, both the first normalized image $U_j$, the intensity image $I_j$ and the second normalized image $N_j$ are be together considered as suitable PoTion representations, i.e. representations of the evolution of the position estimation of a keypoint during the video, and combined, for example by stacking. Alternatively or in addition, the raw image $S_j$ can be considered.

In a further step (b), the CNN is properly trained using the obtained PoTion representations. By training, it is meant the determination of the optimal values of parameters and weights or the CNN. As it will be explained, step (b) preferably does not comprise any pretraining.

To this order, are used as input the sets associated to each training video of images $S_j, U_j, I_j, N_j$ representing the evolution of the position estimation of each keypoint during the video.

Preferably, for each training video, the corresponding input of the CNN is composed of the corresponding images $S_j, U_j, I_j, N_j$ stacked for all keypoints $j \in [\![1;n]\!]$, into a "global" image representing the evolution of the position estimation of all keypoints during the video.

As the PoTion representation has significantly less texture than standard images, the network architecture does not need to be deep and does not require any pretraining. Hence, any known CNN architecture may be efficiently used.

The CNNs generally contain four types of layers processing the information:

- the convolution layer which processes blocks of the image one after the other;
- the non-linear layer (also called correction layer) which allows pertinence of the result to be improved by applying an "activation function";
- the pooling layer which allows the grouping together of several neurons in one single neuron;
- the fully connected layer that connects all the neurons of a layer with all the neurons of the preceding layer.

Are known in the realm of CNNs batch normalization layers to accelerate learning of data.

At the present time, the activation function of the non-linear layer the most frequently used is the ReLU function (Rectified Linear Unit) which is equal to f(x) = max(0, x), and the pooling layer the most used is the MaxPool2x2 function which corresponds to a maximum between four values of a square (four values are pooled into one), but other polling functions such as AveragePool or SumPool.

The convolution layer, denoted CONV, and the fully connected layer denoted FC, generally correspond to a scalar product between the neurons of the preceding layer and the weights of the CNN.

Typical CNN architectures stack a few pairs of layers CONV → RELU then add a layer POOL and repeat this scheme [(CONV → RELU)p → POOL] until a sufficiently small output vector is obtained, and terminate with one or two fully connected layers FC.

Here is a typical CNN architecture:

$$\text{INPUT} \rightarrow [[\text{CONV} \rightarrow \text{RELU}]p \rightarrow \text{POOL}]n \rightarrow \text{FC}$$

In the present method the CNN used advantageously comprises 6 convolutional layers CONV and 1 fully-connected layer FC, as represented by figure 7 which presents an overview of the proposed architecture.

Each convolutional layer CONV is followed by a batch normalization layer and a ReLU non-linearity layer. A batch size of 32 can be used. After 3 blocks with 2 convolutional layers CONV in each one, the CNN comprises a global average pooling layer AVPOOL followed by a fully-connected layer FC with soft-max to perform video classification.

In the preferred example wherein there are 18 human joint keypoints localized (i.e. 19 with the background) and both the first normalized image $U_j$, the intensity image $I_j$, and the second normalized image $N_j$ are considered, the number of input channels is 19 x (2C + 1) channels (as the first normalized image $U_j$ and the second normalized image $N_j$ have both C channels and the intensity image $I_j$ one channel).

All convolutions have for example a kernel size of 3, the first one with a stride of 2 and the second one with a stride of 1. Consequently, at the beginning of each block, the spatial resolution of the feature maps is divided by two. When the spatial resolution is reduced, the number of channels is doubled at the same time, starting with 128 channels for the first block, 256 channels for the second block, and 512 channels for the third block.

The number of blocks, the number of convolutional layers per block and the number of channels may vary.

All layer weights can be initialized with the initialization as proposed in document X. Glorot and Y. Bengio. Understanding the difficulty of training deep feedforward neural networks. In ICAIS, 2010. This is in contrast to standard action recognition methods that require pretraining on ImageNet even for modalities such as optical flow. The above-mentioned document J. Carreira and A. Zisserman. Quo vadis, action recognition? A new model and the Kinetics dataset. In CVPR, 2017. Has indeed highlighted the importance of pretraining for action recognition with the Kinetics dataset.

In contrast, the present CNN, which takes as input the PoTion representation, can be trained from scratch.

During training, are for example dropped activations with a probability of 0.25 after each convolutional layer CONV. The network can be optimized as for example explained by document D. Kingma and J. Ba. Adam: A method for stochastic optimization. In ICLR, 2015.

Once that the compact PoTion representation has been preprocessed for every training video of the dataset (i.e. after step (a)), it takes approximatively for example four hours to train the present CNN on a NVIDIA Titan X GPU on the "HMDB" dataset (*H. Kuehne, H. Jhuang, E. Garrote, T. Poggio, and T. Serre. HMDB: a large video database for human motion recognition. In ICCV, 2011.*) This dataset contains 6,766 video clips from 51 classes, such as brush hair, sit or swing baseball.

In other words, the video classification training can be done in a few hours on a single GPU without any pretraining.

This stands in contrast to most state-of-the-art approaches that often require multiple days on several GPUs with an important pretraining stage as taught for instance by J. Carreira and A. Zisserman. Quo vadis, action recognition? A new model and the Kinetics dataset. In CVPR, 2017.

Data augmentation is known to play a central role in CNN training. Without surprise, randomly flipping the inputs at training significantly improves the performance, as is typically the case with image and action classification. Note that, in the example of human joints, it is not only needed to horizontally flip the PoTion representation, but also to swap the channels that correspond to the left and the right joints (because of the human symmetry).

The skilled person could person some other strategies, such as smoothing the heatmaps, shifting them by a few pixels randomly for each joint, i.e., adding small amount of random spatial noise, or doing random cropping.

*Classification method*

Z There is proposed an inputted video classification method implemented by the data processing means 11b of the second server 1b. In other words the method classifies an action performed by a subject in an inputted video.

Said video to be classified can be received from the client equipment 10.

At a first step (a), the training of a CNN is performed by the first server 1a (from a base of training videos depicting said subject performing already classified actions). Z Said training is consistent with the method according to the first aspect, i.e. for each training video a PoTion representation (as already explained a set of images $S_j, U_j, I_j, N_j$ - possibly stacked - representing the evolution of the position estimation of keypoints $j$ during the video) is generated and the training is performed on the basis of these representations.

It is to be understand that either the first and the second server 1a, 1b are the same equipment, or step (a) comprise the transmission of the trained CNN parameters and weigths from the first server 1a to the second server 1b, for storage in the memory 12.

At a second step (b), the processing means 11b of the second server 1b generates a PoTion representation of the inputted video.

Step (b) comprises:

(b0) for each frame $t \in [\![1; T]\!]$ of said inputted video, for each of at least one keypoint $j \in [\![1; n]\!]$ of the subject, generating a heatmap $\mathcal{H}_j^t$ of the keypoint $j$ representing a position estimation of the keypoint $j$ within said frame $t$;

(b1) colorizing each heatmap $\left\{ \mathcal{H}_j^t \right\}_{t \in [\![1;T]\!], j \in [\![1;n]\!]}$ as a function of the relative time of the corresponding frame $t$ in the video;

(b2) for each keypoint $j \in [\![1; n]\!]$, aggregating all the colorized heatmaps $C_j^t$ of the keypoint $j$ into at least one image $S_j, U_j, I_j, N_j$ representing the evolution of the position estimation of the keypoint $j$ during the video.

Said sub-steps (b0) to (b2) are advantageously equivalent to sub-steps (a0) to (a2) and can include any refinement thereof. It is to be noted that step (b) may previously comprise the trimming of the inputted video (so that it only contains a single action to be recognized).

At a third step (c), the data processing means 11b of the second server 1b classify the inputted video with the Z CNN trained in accordance with the learning method of the first aspect using as input the set of images $S_j, U_j, I_j, N_j$ representing the evolution of the position estimation of each keypoint $j$ during the video. Finally, the classification result obtained can be transmitted back to said client equipment 10.

*Tests*

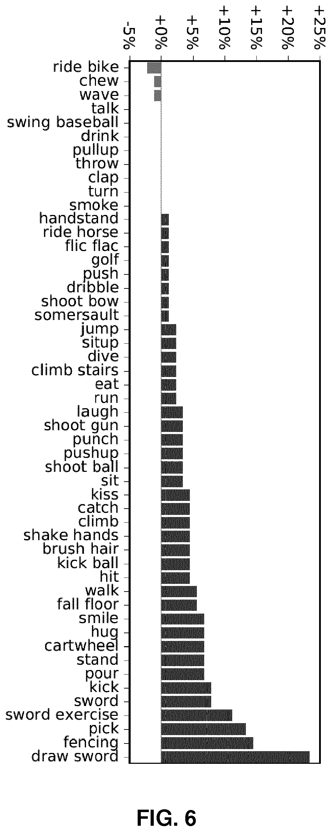

**Figure 6** shows that the classification accuracy significantly improves for nearly all classes with respect to 13D. Note that some classes are already perfectly classified, thus no further gain is possible. We observe that the classes with the largest gain are often related to a large motion of the upper body joints. For instance, four classes that involves a movement with a sword (draw sword, fencing, sword and sword exercise) are among the classes that benefit most from the present PoTion representation on the HMDB dataset.

A possible explanation is that the relative positions of the body parts involved in these complex movements over the full action are important for recognition. This representation gracefully encodes long-term dependencies and thus provides an adequate description and improves classification for such classes.

*Computer program product*

In a second and third aspect, the invention concerns a computer program product comprising code instructions to execute a method (particularly on the data processing means 11a, 11b of the first or second server 1a, 1b) according to the first aspect of the invention for training a convolution neural network CNN, or a method according to the second aspect of the invention for classification of an action performed by a subject in an inputted video, and storage means readable by computer equipment (memory of the first or second server 1a, 1b) provided with this computer program product.

**Claims**

1. A method for training a convolution neural network, CNN, for classification of an action performed by a subject in a video;
   the method being **characterized in that** it comprises the implementation, by a data processor (11a) of a first server (1a), of steps of:

   (a) For each video of a base of training videos depicting said subject performing already classified actions,

   (a0) for each frame ( $t \in [\![1; T]\!]$ ) of said video, for each of at least one keypoint ( $j \in [\![1; n]\!]$ ) of the subject, generating a heatmap $(\mathcal{H}_j^t)$ of the keypoint (*j*) representing a position estimation of the keypoint (*j*) within said frame (*t*);

   (a1) colorizing each heatmap $\left(\{\mathcal{H}_j^t\}_{t\in[\![1;T]\!], j\in[\![1;n]\!]}\right)$ as a function of the relative time of the corresponding frame (t) in the video;

   (a2) for each keypoint ( $j \in [\![1; n]\!]$ ), aggregating all the colorized heatmaps $(C_j^t)$ of the keypoint (*j*) into at least one image ($S_j, Uj, I_j, N_j$) representing the evolution of the position estimation of the keypoint (*j*) during the video;

   (b) Training the CNN using as input the sets associated to each training video of images ($S_j, Uj, I_j, N_j$) representing the evolution of the position estimation of each keypoint (*j*) during the video.

2. A method according to claim 1, wherein step (a2) comprises applying to each heatmap $(\mathcal{H}_j^t)$ a C-dimensional colorization function ($o(t) = (o_1(t), ...,o_c(t))$) only depending on the relative time of the corresponding frame (*t*) in the video.

3. A method according to claim 2, wherein the T frames are split into *C* - 1 intervals, the C-dimensional colorization function ($o(t)$) being defined so that in each k-th interval, $k \in [\![1; C-1]\!]$ , the k-th component ($o_k(t)$) of said C-dimensional colorization function ($o(t)$) decreases from 1 to 0, the k+1-th component ($o_{k+1}(t)$) of said C-dimensional colorization function ($o(t)$) increases from 0 to 1, and any other component ($o_c(t)$) of said C-dimensional colorization function ($o(t)$) stays equal to 0.

4. A method according to claim 3, wherein the components $o_c(t)$, $c \in [\![1; C]\!]$ of the C-dimensional colorization function $o(t)$ satisfy the following properties:

   - $\forall t_1, t_2 \in [\![1; T]\!]^2, \sum_{c=1}^{C} o_c(t_1) = \sum_{c=1}^{C} o_c(t)$ ;
   - $\forall c \in [\![1; C]\!]$ , $o_c(t)$ is a continuous piecewise linear function.

5. A method according to any one of claims 2 to 4, wherein the colorized heatmap value $C_j^t$ of a keypoint *j* at frame *t* for a pixel *(x; y)* and a channel *c* $\in [\![1; C]\!]$ is given from the heatmap value $\mathcal{H}_j^t$ by the formula

$$C_j^t[x;y;c] = o_c(t) \cdot \mathcal{H}_j^t[x;y]$$ , with $o_c(t)$ the c-th component of said C-dimensional colorization function $o(t)$.

6. A method according to any one of claims 1 to 5, wherein step (a2) comprises, for each keypoint $(j \in [\![1;n]\!])$ , determining a raw image ($S_j$) by summing colorized heatmaps $(C_j^t)$ of the keypoint ($j$) over the frames ($t$).

7. A method according to claim 6, wherein step (a2) comprises, for each raw image ($S_j$), the normalization of the raw image ($S_j$) into a first normalized image ($U_j$).

8. A method according to claim 7, wherein the first normalized image $U_j$ value of a keypoint $j$ for a pixel $(x; y)$ and a channel c is given from the corresponding raw image $S_j$ value by the formula $$U_j^t[x;y;c] = \frac{S_j^t[x;y;c]}{max_{x',y'}S_j^t[x';y';c]}$$ .

9. A method according to one of claims 7 and 8, wherein step (a2) comprises, for each first normalized image ($U_j$), the aggregation of the C channels of first normalized image ($U_j$) into a 1-channel intensity image ($I_j$).

10. A method according to claim 9, wherein each intensity image ($I_j$) is determined by summing over the channels ($c$) of the corresponding first normalized image ($U_j$).

11. A method according to one of claims 9 and 10, wherein step (a2) comprises, for each first normalized image ($U_j$), the further normalization of the first normalized image ($U_j$) into second normalized image ($N_j$), as a function of the corresponding intensity image ($I_j$).

12. A method according to claim 11, wherein the second normalized image $N_j$ value of a keypoint $j$ for a pixel $(x; y)$ and a channel $c$ is given from the corresponding first normalized image $U_j$ value and the intensity image $I_j$ value by the formula $$N_j[x;y;c] = \frac{U_j[x;y;c]}{\varepsilon + I_j[x;y]}$$

13. A method according to any one of claims 1 to 12, wherein step (b) comprises, for each training video, stacking the set of images ($S_j, U_j, I_j, N_j$) associated to said training video, into a global image representing the evolution of the position estimation of all keypoints ($j$) during the video, for use as input of the CNN.

14. A method for classification of an action performed by a subject in an inputted video, the classification being performed by the CNN trained by the data processor of the first server in accordance with the learning method of any claims 1 to 13, **characterized in that** it comprises the implementation of steps of:

    (a) Performing, by processing means (11b) of a second server (1b),

        (a0) for each frame $(t \in [\![1;T]\!])$ of said inputted video, for each of at least one keypoint $(j \in [\![1;n]\!])$ of the subject, generating a heatmap $(\mathcal{H}_j^t)$ of the keypoint ($j$) representing a position estimation of the keypoint ($j$) within said frame ($t$);

        (a1) colorizing each heatmap $(\{\mathcal{H}_j^t\}_{t \in [\![1;T]\!], j \in [\![1;n]\!]})$ as a function of the relative time of the corresponding frame ($t$) in the video;

        (a2) for each keypoint ($j \in [1;n]$), aggregating all the colorized heatmaps $(C_j^t)$ of the keypoint ($j$) into at least one image ($S_j, U_j, I_j, N_j$) representing the evolution of the position estimation of the keypoint ($j$) during the video;

    (b) Classifying the inputted video, by the data processing means (11) of the second server (1b), with the CNN trained in accordance with the learning method of any claims 1 to 13 using as input a set of images ($S_j, U_j, I_j, N_j$) representing the evolution of the position estimation of each keypoint ($j$) during the video.

15. Computer program product comprising code instructions to execute a method according to one of claims 1 to 14 for training a convolution neural network CNN, or for classification of an action performed by a subject in an inputted video, when said program is executed on a computer

16. A computer-readable medium, on which is stored a computer program product comprising code instructions for executing a method according to any one of claims 1 to 14 for training a convolution neural network CNN, or for classification of an action performed by a subject in an inputted video.

**Patentansprüche**

1. Verfahren zur Schulung eines Convolution Neural Networks, CNN, zur Klassifizierung einer Aktion, die von einer Person in einem Video durchgeführt wird; wobei das Verfahren **dadurch gekennzeichnet ist, dass** es die Implementierung der folgenden Schritte durch einen Datenprozessor (11a) eines ersten Servers (1a) umfasst:

   (a) für jedes Video einer Basis von Schulungsvideos, die die Person zeigen, die bereits klassifizierte Aktionen durchführt,

   (a0) für jeden Einzelbild $(t \in [\![1;T]\!])$ des Videos für jeden von mindestens einem Keypoint $(j \in [\![1;n]\!])$ der Person Erzeugen einer Heatmap $(\mathcal{H}_j^t)$ des Keypoints (j), die eine Positionsschätzung des Keypoints (j) innerhalb des Einzelbildes (t) darstellt;

   (a1) Kolorieren jeder Heatmap $\left(\{\mathcal{H}_j^t\}_{t\in[\![1;T]\!],j\in[\![1;n]\!]}\right)$ in Abhängigkeit von der relativen Zeit des entsprechenden Einzelbildes (t) in dem Video;

   (a2) für jeden Keypoint $(j \in [\![1;n]\!])$ Aggregieren aller kolorierten Heatmaps $(C_j^t)$ des Keypoints (j) zu mindestens einem Bild $(S_j, U_j, I_j, N_j)$, das die Entwicklung der Positionsschätzung des Keypoints (j) während des Videos darstellt;

   (b) Schulen des CNN unter Verwendung der mit jedem Schulungsvideo assoziierten Sätze von Bildern $(S_j, U_j, I_j, N_j)$, die die Entwicklung der Positionsschätzung jedes Keypoints (j) während des Videos darstellen, als Eingabe.

2. Verfahren nach Anspruch 1, wobei Schritt (a2) ein Anwenden einer C-dimensionalen Kolorierungsfunktion $(o(t) = (o_1(t), ..., o_c(t)))$ auf jede Heatmap $(\mathcal{H}_j^t)$ nur in Abhängigkeit von der relativen Zeit des entsprechenden Einzelbildes (t) in dem Video umfasst.

3. Verfahren nach Anspruch 2, wobei die T Einzelbilder in C — 1 Intervalle aufgeteilt werden, wobei die C-dimensionale Kolorierungsfunktion $(o(t))$ so definiert ist, dass in jedem k-ten Intervall $k \in [\![1;C-1]\!]$, die k-te Komponente $(o_k(t))$ der C-dimensionalen Kolorierungsfunktion $(o(t))$ von 1 auf 0 abnimmt, die k+1-te Komponente $(o_{k+1}(t))$ der C-dimensionalen Kolorierungsfunktion $(o(t))$ von 0 auf 1 zunimmt und jegliche andere Komponente $(o_c(t))$ der C-dimensionalen Kolorierungsfunktion $(o(t))$ auf 0 gleich bleibt.

4. Verfahren nach Anspruch 3, wobei die Komponenten $o_c(t)$, $c \in [\![1;C]\!]$ der C-dimensionalen Kolorierungsfunktion $o(t)$ die folgenden Eigenschaften erfüllen:

   - $\forall t_1, t_2 \in [\![1;T]\!]^2, \sum_{c=1}^{C} o_c(t_1) = \sum_{c=1}^{C} o_c(t)$ ;
   - $\forall c \in [\![1;C]\!]$, $o_c(t)$ ist eine kontinuierliche stückweise lineare Funktion.

5. Verfahren nach einem der Ansprüche 2 bis 4, wobei der Wert der kolorierten Heatmap $C_j^t$ eines Keypoints j am Einzelbild t für ein Pixel (x; y) und einen Kanal $c \in [\![1;C]\!]$ aus dem Heatmap-Wert $\mathcal{H}_j^t$ durch die Formel $C_j^t[x;y;c] = o_c(t) \cdot \mathcal{H}_j^t[x;y]$ gegeben wird, wobei $o_c(t)$ die c-te Komponente der C-dimensionalen Kolorierungsfunktion o(t) ist.

6.  Verfahren nach einem der Ansprüche 1 bis 5, wobei Schritt (a2) für jeden Keypoint $(j \in [\![1; n]\!])$ ein Bestimmen eines Rohbilds ($S_j$) durch Summieren von kolorierten Heatmaps $(C_j^t)$ des Keypoints ($j$) über die Einzelbilder ($t$) umfasst.

7.  Verfahren nach Anspruch 6, wobei Schritt (a2) für jedes Rohbild ($S_j$) die Normalisierung des Rohbilds ($S_j$) zu einem ersten normalisierten Bild ($U_j$) umfasst.

8.  Verfahren nach Anspruch 7, wobei der Wert des ersten normalisierten Bilds $U_j$ eines Keypoints $j$ für ein Pixel *(x; y)* und einen Kanal c aus dem Wert des entsprechenden Rohbilds $S_j$ durch die Formel

    $$U_j^t[x; y; c] = \frac{S_j^t[x;y;c]}{max_{x',y'}S_j^t[x';y';c]}$$ gegeben wird.

9.  Verfahren nach einem der Ansprüche 7 und 8, wobei Schritt (a2) für jedes erste normalisierte Bild ($U_j$) die Aggregation der *C* Kanäle des ersten normalisierten Bilds ($U_j$) zu einem 1-Kanal-Intensitätsbild ($I_j$) umfasst.

10. Verfahren nach Anspruch 9, wobei jedes Intensitätsbild ($I_j$) durch Summieren über die Kanäle (*c*) des entsprechenden ersten normalisierten Bilds ($U_j$) bestimmt wird.

11. Verfahren nach einem der Ansprüche 9 und 10, wobei Schritt (a2) für jedes erste normalisierte Bild ($U_j$) die weitere Normalisierung des ersten normalisierten Bilds ($U_j$) zu einem zweiten normalisierten Bild ($N_j$) in Abhängigkeit von dem entsprechenden Intensitätsbild ($I_j$) umfasst.

12. Verfahren nach Anspruch 11, wobei der Wert des zweiten normalisierten Bilds $N_j$ eine Keypoints *j* für ein Pixel (*x;y*) und einen Kanal *c* aus dem Wert des entsprechenden ersten normalisierten Bilds $U_j$ und dem Wert des Intensitätsbilds

    $I_j$ durch die Formel $$N_j[x; y; c] = \frac{U_j[x;y;c]}{\varepsilon + I_j[x;y]}$$ gegeben wird.

13. Verfahren nach einem der Ansprüche 1 bis 12, wobei Schritt (b) für jedes Schulungsvideo ein Stapeln des Satzes von Bildern ($S_j, U_j, I_j, N_j$), die mit dem Schulungsvideo assoziiert sind, zu einem globalen Bild, das die Entwicklung der Positionsschätzung aller Keypoints (*j*) während des Videos darstellt, zur Verwendung als Eingabe des CNN umfasst.

14. Verfahren zur Klassifizierung einer Aktion, die von einer Person in einem eingegebenen Video durchgeführt wird, wobei die Klassifizierung von dem CNN durchgeführt wird, das durch den Datenprozessor des ersten Servers gemäß dem Lernverfahren nach einem der Ansprüche 1 bis 13 geschult wird, **dadurch gekennzeichnet, dass** es die Implementierung der folgenden Schritte umfasst:

    (b) durch ein Verarbeitungsmittel (11b) eines zweiten Servers (1b) Durchführen

        (b0) für jeden Einzelbild $(t \in [\![1; T]\!])$ des eingegebenen Videos für jeden von mindestens einem Keypoint $(j \in [\![1; n]\!])$ der Person Erzeugen einer Heatmap $(\mathcal{H}_j^t)$ des Keypoints (*j*), die eine Positionsschätzung des Keypoints (*j*) innerhalb des Einzelbildes (t) darstellt;

        (b1) Kolorieren jeder Heatmap $\left(\{\mathcal{H}_j^t\}_{t\in[\![1;T]\!], j\in[\![1;n]\!]}\right)$ in Abhängigkeit von der relativen Zeit des entsprechenden Einzelbildes (*t*) in dem Video;

        (b2) für jeden Keypoint $(j \in [\![1; n]\!])$ Aggregieren aller kolorierten Heatmaps $(C_j^t)$ des Keypoints (*j*) zu mindestens einem Bild ($S_j, U_j, I_j, N_j$), das die Entwicklung der Positionsschätzung des Keypoints (*j*) während des Videos darstellt;

    (c) Klassifizieren des eingegebenen Videos durch das Datenverarbeitungsmittel (11) des zweiten Servers (1b), wobei das CNN gemäß dem Lernverfahren nach einem der Ansprüche 1 bis 13 unter Verwendung eines Satzes von Bildern $(S_j, U_j, I_j, N_j)$, die die Entwicklung der Positionsschätzung jedes Keypoints ($j$) während des Videos darstellen, als Eingabe geschult wird.

**15.** Computerprogrammprodukt, das Code-Anweisungen umfasst, um ein Verfahren nach einem der Ansprüche 1 bis 14 zur Schulung eines Convolution Neural Networks, CNN, oder zur Klassifizierung einer Aktion, die von einer Person in einem eingegebenen Video durchgeführt wird, auszuführen, wenn das Programm auf einem Computer ausgeführt wird.

**16.** Computerlesbares Medium, auf dem ein Computerprogrammprodukt gespeichert ist, das Code-Anweisungen zum Ausführen eines Verfahrens nach einem der Ansprüche 1 bis 14 zur Schulung eines Convolution Neural Networks, CNN, oder zur Klassifizierung einer Aktion, die von einer Person in einem eingegebenen Video durchgeführt wird, umfasst.

**Revendications**

**1.** Méthode pour l'entraînement d'un réseau neuronal à convolution, CNN, pour la classification d'une action réalisée par un sujet dans une vidéo ;

la méthode étant **caractérisée en ce qu'**elle comprend la mise en œuvre, par un processeur de données (11a) d'un premier serveur (1a), des étapes suivantes :

(a) pour chaque vidéo d'une base de vidéos d'entraînement représentant ledit sujet réalisant des actions déjà classées,

(a0) pour chaque image $(t \in [\![1; T]\!])$ de ladite vidéo, pour chacun d'au moins un point clé $(j \in [\![1; n]\!])$ du sujet, la génération d'une carte thermique $(\mathcal{H}_j^t)$ du point clé ($j$) représentant une estimation de position du point clé ($j$) au sein de ladite image ($t$) ;

(a1) la colorisation de chaque carte thermique $(\{\mathcal{H}_j^t\}_{t \in [\![1;T]\!], j \in [\![1;n]\!]})$ en fonction du temps relatif de l'image correspondante ($t$) dans la vidéo ;

(a2) pour chaque point clé $(j \in [\![1; n]\!])$, l'agrégation de toutes les cartes thermiques colorisées $(C_j^t)$ du point clé ($j$) en au moins une image $(S_j, U_j, I_j, N_j)$ représentant l'évolution de l'estimation de position du point clé ($j$) pendant la vidéo ;

(b) l'entraînement du CNN à l'aide, en tant qu'entrée, des ensembles associés à chaque vidéo d'entraînement d'images $(S_j, U_j, I_j, N_j)$ représentant l'évolution de l'estimation de position de chaque point clé ($j$) pendant la vidéo.

**2.** Méthode selon la revendication 1, dans laquelle l'étape (a2) comprend l'application, à chaque carte thermique $(\mathcal{H}_j^t)$, d'une fonction de colorisation de dimension C ($o(t) = (o_1(t), ..., o_c(t))$) dépendant uniquement du temps relatif de l'image correspondante (t) dans la vidéo.

**3.** Méthode selon la revendication 2, dans laquelle les $T$ images sont divisées en $C — 1$ intervalles, la fonction de colorisation de dimension C ($o(t)$) étant définie de sorte que dans chaque k-ième intervalle, $k \in [\![1; C - 1]\!]$, la k-ième composante ($o_k(t)$) de ladite fonction de colorisation de dimension C ($o(t)$) diminue de 1 à 0, la k+1-ième composante ($o_{k+1}(t)$) de ladite fonction de colorisation de dimension C ($o(t)$) augmente de 0 à 1, et toute autre composante ($o_c(t)$) de ladite fonction de colorisation de dimension C ($o(t)$) reste égale à 0.

**4.** Méthode selon la revendication 3, dans laquelle les composantes $o_c(t)$, $c \in [\![1; C]\!]$ de la fonction de colorisation de dimension C $o(t)$ satisfont les propriétés suivantes :

- $\forall t_1, t_2 \in [\![1; T]\!]^2, \sum_{c=1}^{C} o_c(t_1) = \sum_{c=1}^{C} o_c(t)$ ;
- $\forall c \in [\![1; C]\!]$, $o_c(t)$ est une fonction affine par morceaux continue.

**5.**

Méthode selon l'une quelconque des revendications 2 à 4, dans laquelle la valeur de carte thermique colorisée $C_j^t$ d'un point clé *j* à l'image *t* pour un pixel *(x;* y) et un canal $c \in [\![1;C]\!]$ est donnée à partir de la valeur de carte thermique $\mathcal{H}_j^t$ par la formule $C_j^t[x;y;c] = o_c(t) \cdot \mathcal{H}_j^t[x;y]$ , avec $o_c(t)$ étant la c-ième composante de ladite fonction de colorisation de dimension C *o(t)*.

6. Méthode selon l'une quelconque des revendications 1 à 5, dans laquelle l'étape (a2) comprend, pour chaque point clé $(j \in [\![1;n]\!])$ , la détermination d'une image brute ($S_j$) par la sommation des cartes thermiques colorisées $(C_j^t)$ du point clé (*j*) sur les images (*t*).

7. Méthode selon la revendication 6, dans laquelle l'étape (a2) comprend, pour chaque image brute ($S_j$), la normalisation de l'image brute ($S_j$) en une première image normalisée ($U_j$).

8. Méthode selon la revendication 7, dans laquelle la première valeur $U_j$ d'image normalisée d'un point clé *j* pour un pixel *(x; y)* et un canal c est donnée à partir de la valeur $S_j$ d'image brute correspondante par la formule $U_j^t[x;y;c] = \frac{S_j^t[x;y;c]}{max_{x',y'}S_j^t[x';y';c]}$ .

9. Méthode selon l'une des revendications 7 et 8, dans laquelle l'étape (a2) comprend, pour chaque première image normalisée ($U_j$), l'agrégation des *C* canaux de la première image normalisée ($U_j$) en une image d'intensité ($I_j$) à 1 canal.

10. Méthode selon la revendication 9, dans laquelle chaque image d'intensité ($I_j$) est déterminée par la sommation sur les canaux (c) de la première image normalisée ($U_j$) correspondante.

11. Méthode selon l'une des revendications 9 et 10, dans laquelle l'étape (a2) comprend, pour chaque première image normalisée ($U_j$), la normalisation supplémentaire de la première image normalisée ($U_j$) en une seconde image normalisée ($N_j$), en fonction de l'image d'intensité ($I_j$) correspondante.

12. Méthode selon la revendication 11, dans laquelle la seconde valeur $N_j$ d'image normalisée d'un point clé *j* pour un pixel *(x; y)* et un canal c est donnée à partir de la première valeur $U_j$ d'image normalisée correspondante et de la valeur $I_j$ d'image d'intensité par la formule $N_j[x;y;c] = \frac{U_j[x;y;c]}{\varepsilon + I_j[x;y]}$ .

13. Méthode selon l'une quelconque des revendications 1 à 12, dans laquelle l'étape (b) comprend, pour chaque vidéo d'entraînement, l'empilement de l'ensemble d'images ($S_j, U_j, I_j, N_j$) associées à ladite vidéo d'entraînement en une image globale représentant l'évolution de l'estimation de position de tous les points clés (*j*) pendant la vidéo, pour son utilisation en tant qu'entrée du CNN.

14. Méthode pour la classification d'une action réalisée par un sujet dans une vidéo entrée, la classification étant réalisée par le CNN entraîné par le processeur de données du premier serveur conformément à la méthode d'apprentissage selon l'une quelconque des revendications 1 à 13, **caractérisée en ce qu'**elle comprend la mise en œuvre des étapes suivantes :

(b) la réalisation, par des moyens de traitement (11b) d'un second serveur (1b), de

(b0) pour chaque image $(t \in [\![1;T]\!])$ de ladite vidéo entrée, pour chacun d'au moins un point clé $(j \in [\![1;n]\!])$ du sujet, la génération d'une carte thermique $(\mathcal{H}_j^t)$ du point clé (*j*) représentant une estimation de position du point clé (*j*) au sein de ladite image (*t*) ;

(b1) la colorisation de chaque carte thermique $(\{\mathcal{H}_j^t\}_{t \in [\![1;T]\!], j \in [\![1;n]\!]})$ en fonction du temps relatif de l'image correspondante (*t*) dans la vidéo ;

(b2) pour chaque point clé $(j \in [\![1;n]\!])$, l'agrégation de toutes les cartes thermiques colorisées $(C_j^t)$ du point clé (*j*) en au moins une image ($S_j, U_j, I_j, N_j$) représentant l'évolution de l'estimation de position du point clé (*j*) pendant la vidéo ;

(c) le classement de la vidéo entrée, par les moyens de traitement de données (11) du second serveur (1b), avec le CNN entraîné conformément à la méthode d'apprentissage selon l'une quelconque des revendications 1 à 13 à l'aide, en tant qu'entrée, d'un ensemble d'images ($S_j, U_j, I_j, N_j$) représentant l'évolution de l'estimation de position de chaque point clé (*j*) pendant la vidéo.

**15.** Produit programme d'ordinateur comprenant des instructions de code pour exécuter une méthode selon l'une des revendications 1 à 14 pour l'entraînement d'un réseau neuronal à convolution, CNN, ou pour la classification d'une action réalisée par un sujet dans une vidéo entrée, lorsque ledit programme est exécuté sur un ordinateur.

**16.** Support lisible par ordinateur, sur lequel est stocké un produit programme d'ordinateur comprenant des instructions de code pour l'exécution d'une méthode selon l'une quelconque des revendications 1 à 14 pour l'entraînement d'un réseau neuronal à convolution, CNN, ou pour la classification d'une action réalisée par un sujet dans une vidéo entrée.

FIG. 1

FIG. 2

$$C = 2$$

FIG. 3a

$$C = 3$$

FIG. 3b

**FIG. 4a**

**FIG. 4b**

FIG. 4c

FIG. 4d

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. CARREIRA ; A. ZISSERMAN.** Quo vadis, action recognition? A new model and the Kinetics dataset. *CVPR,* 2017
- **Z. CAO ; T. SIMON ; S.-E. WEI ; Y. SHEIKH.** Real-time multi-person 2D pose estimation using part affinity fields. *CVPR,* 2017
- **X. GLOROT ; Y. BENGIO.** Understanding the difficulty of training deep feedforward neural networks. *ICAIS,* 2010
- **D. KINGMA ; J. BA. ADAM.** A method for stochastic optimization. *ICLR,* 2015
- **H. KUEHNE ; H. JHUANG ; E. GARROTE ; T. POGGIO ; T. SERRE.** HMDB: a large video database for human motion recognition. *ICCV,* 2011